# EUROPEAN PATENT APPLICATION

(11) **EP 4 694 078 A1**
(43) Date of publication of application: **11.02.2026**
(21) Application number: 24193639.2
(22) Date of filing: 08.08.2024
(51) Int. Cl.: H04L 47/2491, H04W 28/12

(54) **METHOD, COMPUTER PROGRAM, AND APPARATUS FOR ADAPTING A QUALITY-OF-SERVICE MAPPING IN A MOBILE COMMUNICATION SYSTEM**

(71) Applicant: Deutsche Telekom AG, 53113 Bonn (DE)
(72) Inventor: COLOM IKUNO, Josep, 2100 Korneuburg (AT); GONTER, Johannes, 2201 Gerasdorf bei Wien (AT)
(74) Representative: 2SPL Patentanwälte PartG mbB

(57) **Abstract**

Examples relate to methods, computer programs, and apparatuses adapting a Quality-of-Service, QoS, mapping in a cellular mobile communication system. The method (10) is configured for adapting a Quality-of-Service, QoS, mapping in a cellular mobile communication system (400). The cellular mobile communication system (400) is configured to provide one or more services to user equipment (200), UE, based on one or more QoS flows. The method (10) comprises detecting (11) a cell change event of a UE (200) changing between a first radio cell and a second radio cell in the mobile communication system (400). The UE (200) is serviced by the first radio cell based on at least one QoS flow, wherein a QoS mapping used by or associated to the first radio cell is applied to the at least one QoS flow. The method (10) further comprises determining (12) whether the second radio cell uses a different QoS mapping than the first radio cell and in response to the QoS mapping of the second radio cell being different adapting (13) QoS parameters of the QoS flow of the UE (200) based on the QoS mapping of the second radio cell.

## Description

### Field

Examples relate to methods, computer programs, apparatuses, user equipment, network node, and communication system for adapting a Quality-of-Service, QoS, mapping in a cellular mobile communication system, more particularly, but not exclusively, to a concept for adapting QoS parameters of a QoS flow upon cell change between cells with different QoS mappings.

### Background

When transmitting data in communication networks, data rate, error rate and latency are key performance indicators. For example, data of some services may be more delay tolerant than others. Email traffic or web browsing are examples of rather delay-tolerant services. Other data services may be rather delay-intolerant, such as communication-class services as voice and video calls. Similar diversity exists with respect to error tolerance, data rate requirements, etc. Therefore, networks use Quality of Service (QoS) parameters and mechanisms to provide different services with adequate quality.

When user equipment, UE, moves through the cells of a mobile communication system, schedulers used by the base stations assign radio resources for data transmission. The scheduling, i.e. the assigning of radio resources, is based on QoS requirements for the services of the users as well as the load within the network. With increasing load in the network, it becomes more challenging to meet QoS requirements of the services. Admission and congestion control mechanisms may be in place to avoid network overload situations, which may result in service degradation. Typically, schedulers may follow QoS indicators, which are assigned to data flows of services, and which indicate certain requirements or service characteristics with respect to QoS parameters like data rate, latency, error rate, etc. The QoS indicators may then be used by the scheduler to adapt the resource assignment to the service requirements and priorities.

### Summary

It is a finding of the present disclosure that if a mapping of QoS indicators and parameters to some data traffic changes among cells, service priorities may change, and user experience may degrade. Such an effect would be perceived by the end user as erratic behavior by the network and can hence be a cause of customer dissatisfaction. For example, if the same QoS indicator is mapped to different QoS parameters, the handling of data flows with the same QoS indicator may become quite different. If, for example, a specific QoS indicator indicates a conversational class service in one cell and a background class in another cell, user experience may be suboptimal if a voice call gets treated as a web browsing session after cell change. Such a situation may occur if cells use different QoS mappings, e.g. cells with different network sharing settings. Examples of the present disclosure therefore allow an adaptation of a QoS mapping upon cell change.

Examples provide a method for adapting a QoS mapping in a cellular mobile communication system. The cellular mobile communication system is configured to provide one or more services to a UE based on one or more QoS flows comprising data packets to which QoS is applied. The method comprises detecting a cell change event of a UE changing between a first radio cell and a second radio cell in the mobile communication system. The UE is serviced by the first radio cell based on at least one QoS flow, wherein a QoS mapping used by or associated to the first radio cell is applied to the at least one QoS flow. The QoS mapping may map QoS parameters to the QoS flow. The method further comprises determining whether the second radio cell uses a different QoS mapping than the first radio cell and in response to the QoS mapping of the second radio cell being different, the method includes adapting QoS parameters of the QoS flow of the UE based on the QoS mapping of the second radio cell. Adapting the QoS mapping if it has changed after cell change allows decreasing or even avoiding bad user experiences after cell change, especially in the case of network sharing, where multiple operators share a common infrastructure.

For example, the first and second radio cells use the same radio access technology. At least one of the first and second radio cells may be a cell shared among multiple operators, especially three or more operators. At least in some examples the UE may be serviced by the same operator in the first and second radio cells. Since the shared cell needs to deal with different load situations among the shares of the multiple operators, aligning the QoS mapping enables continuous QoS parameters assigned to a service when moving through the cells of the mobile communication system. In examples, the adapting of the QoS parameters may comprise triggering a QoS adaption procedure in a core network part of the mobile communication system. As will be outlined in more detail subsequently, there are multiple options to implement the adaptation of the QoS parameters/QoS mapping. In some examples such adaption may be triggered in the core network, in other examples it may be triggered at the UE, and in even further examples both options may be conceivable. In some examples a network function may be used to trigger QoS parameter adaption. The adapting of the QoS parameters may comprise triggering one or more elements of the group of a session management policy change procedure, an access and mobility management function procedure, or a policy and charging rules function procedure of the mobile communication system. That way, an efficient implementation in the core network can be obtained in some examples.

The method may further comprise filtering the cell change event based on a mobility filter policy to determine whether the QoS mapping of the second radio cell is different. The filtering may reduce a signaling load in the network as signaling for events that turn out to not require a QoS adaption can be identified early in the process. In further examples the method may comprise registering a support of heterogeneous QoS deployment of network functions of the mobile communication system at a network repository function. Additionally or alternatively, it may be registered whether a UE needs support of heterogeneous QoS deployments. That way, especially in scenarios with network sharing, the support of the adaptation options can be administered and made available centrally. The adapting of the QoS parameters may comprise triggering a configured network function. Such network function may be configured beforehand or based on a local configuration, depending on the topology or network sharing implementation of the network.

The adapting of the QoS parameters may comprise adapting the QoS parameters at the UE, e.g. based on a configured UE QoS selection policy. Such selection policy may be based on a local configuration at the UE, which can be set up in certain cells or areas. Such adaptation may then be efficiently triggered using signaling to the UE. For example, the method may then further comprise signaling the UE QoS selection policy to the UE as part of a control plane message. Some examples for control plane messages conceivable are NAS messages, especially a UE configuration update message, a UE QoS update message, a UE parameter update or packet data unit session establishment message. In further examples a UE QoS selection policy rule may be associated with a given network, a network selection mode, a packet data unit session, and/or a QoS flow. That way, the adaptation of the QoS parameters can be tied to a certain network, a network selection mode, a packet data unit session, and/or a QoS flow.

In further examples the adapting of the QoS parameters may comprise adapting the QoS parameters at the UE based on a changed QoS parameter indication received in a downlink user and/or control plane transmission. That way, a downlink indication can be used to efficiently trigger the QoS parameter adaption at the UE. Moreover, there can be an indication to a network whether the UE supports QoS change triggering. This may enable an evaluation across involved UEs, for example, if in a shared cell a QoS mapping is to be adapted and the question arises, which operator's QoS mapping should be used. The method may further comprise indicating whether a UE supports multiple different procedures of adapting the QoS parameters and selecting, by a network node, one of the different procedures for adapting of the QoS parameters. That way, the adaption procedure can be tailored to the respective network situation, especially such that it can be assured that all of the network elements involved in providing the network service have the necessary capability or capabilities.

A further example is a computer program having a program code for performing one of the methods described herein, when the computer program is executed on a computer, a processor, or a programmable hardware component. Another example is an apparatus for adapting a QoS mapping in a cellular mobile communication system. The cellular mobile communication system is configured to provide one or more services to user equipment based on one or more QoS flows. The apparatus comprises one or more interfaces configured to communicate in the mobile communication system and one or more processing devices configured to perform one of the methods described herein. Another example is a UE comprising the apparatus and/or a network node, e.g. a core network node of a mobile communication system, comprising an example of the apparatus. Yet another example is a mobile communication system comprising an example of the apparatus.

A communication system is another example comprising user equipment with an example of an apparatus as described above, one or more access networks and a core network node with example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for adapting a Quality-of-Service, QoS, mapping in a cellular mobile communication system;
Fig. 2 shows block diagrams of examples of apparatuses for adapting a Quality-of-Service, QoS, mapping in a cellular mobile communication system;
Fig. 3 shows an overview of a 5G system and a data transmission between UE and data network;
Fig. 4 shows different network sharing models in examples;
Fig. 5 illustrates a MORAN serving UEs of operators A, B, C via shared RAN, resource allocation for shared RAN, and resource assignment;
Fig. 6 illustrates UE mobility between cells not using RAN sharing and cells using RAN sharing;
Fig. 7 shows QoS change while moving between cells in an example;
Fig. 8 depicts a message sequence chart of a Tracking Area Update procedure with Serving GW change (4G);
Fig. 9 shows a message sequence chart of a UE triggered Service Request procedure;
Fig. 10 illustrates message sequence charts of an SM policy change based on AM trigger and AMF-based filtering based on mobility information;
Fig. 11 shows message sequence charts of a UE-based (UQSP) procedure and of a UE-based (UQSP) procedure with reflective QoS; and
Fig. 12 shows a message sequence chart of a UE-based procedure with reflective QoS without UQSP.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof. In the following multiple examples will be detailed. The cited references are incorporated herein. Particularly, any further details of the 3GPP (3^{rd} Generation Partnership Project) systems referred to herein, may be found in the respective specifications available under

### https://www.3gpp.org/ftp/Specs/.

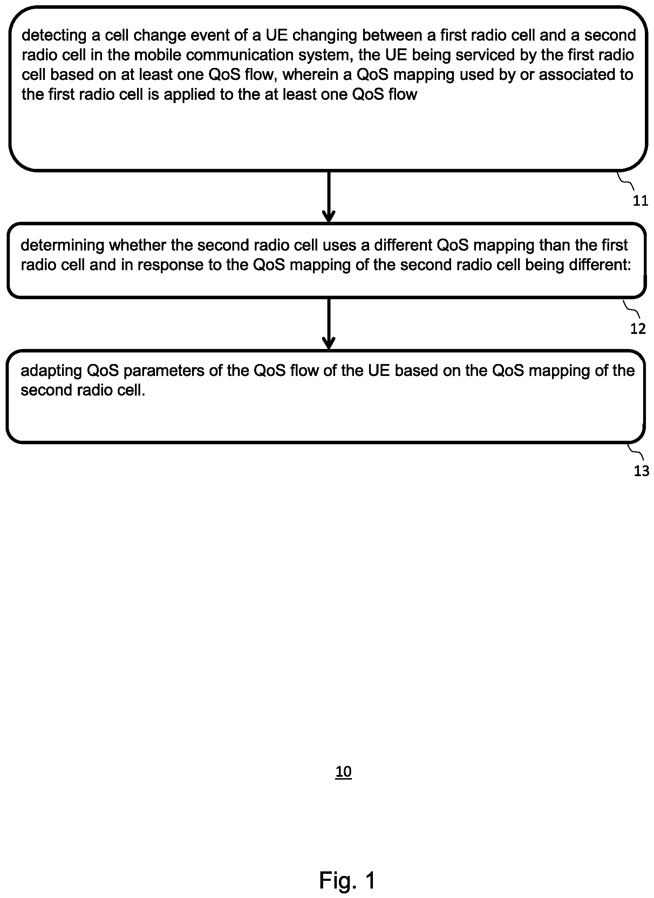

Fig. 1 shows a block diagram of an example of a method 10 for adapting a Quality-of-Service, QoS, mapping in a cellular mobile communication system. The cellular mobile communication system is configured to provide one or more services to user equipment, UE, based on one or more QoS flows. The method 10 comprises detecting 11 a cell-change event of a UE changing between a first radio cell and a second radio cell in the mobile communication system. The UE is serviced by the first radio cell based on at least one QoS flow, wherein a QoS mapping used by or associated to the first radio cell is applied to the at least one QoS flow. QoS parameters are mapped to the QoS flow by the QoS mapping. The method 10 further comprises determining 12 whether the second radio cell uses a different QoS mapping than the first radio cell. In response to the QoS mapping of the second radio cell being different the method 10 further comprises adapting 12 QoS parameters of the QoS flow of the UE based on the QoS mapping of the second radio cell.

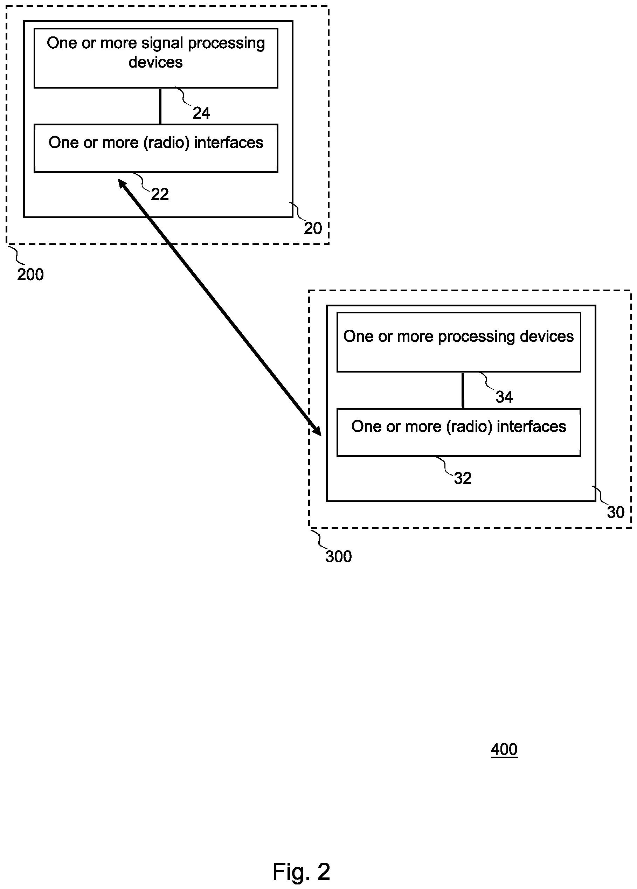

Fig. 2 shows block diagrams of examples of apparatuses 20, 30 for adapting a QoS mapping in a cellular mobile communication system 400. Fig. 2 shows block diagrams of examples of an apparatus 20 for user equipment 200 and an apparatus 30 for a network component 300. At least one of the apparatuses 20, 30 for user equipment 200 and network node is configured to adapt a QoS mapping in the mobile communication system 400. The mobile communication system 400 is configured to provide one or more services to UE 200 based on one or more QoS flows. The apparatus 20, 30 comprises one or more interfaces 22, 32 configured to communicate in the mobile communication system 400. The one or more interfaces 22, 32 are coupled to one or more processing devices 24, 34. The one or more processing devices 24, 34 are configured to perform one of the methods as described herein. Fig. 2 further illustrates an example of a communication system 400 comprising one or more elements of an apparatus 20 for user equipment 200 and an apparatus 30 for a core network component 300. As optional components (broken lines) Fig. 2 illustrates an example of a UE 200 comprising the apparatus 20 and an example of a network node 300 comprising the apparatus 30.

As illustrated in Fig. 2, the respective one or more processing devices 24, 34 are coupled to one or more interfaces 22, 32. The one or more interfaces 22, 32 may correspond to one or more inputs and/or outputs for receiving and/or transmitting information, which may be in digital (bit) values according to a specified code or protocol, within a module, between modules or between modules of different entities. For example, an interface 22, 32 may comprise interface circuitry configured to receive and/or transmit information. In examples an interface 22, 32 may correspond to any means for obtaining, receiving, transmitting or providing analog or digital signals or information, e.g., any connector, contact, pin, register, input port, output port, conductor, lane, etc., which allows providing or obtaining a signal or information. An interface 22, 32 may be configured to communicate (transmit, receive, or both) in a wireless or wireline manner and it may be configured to communicate, i.e., transmit and/or receive signals, information with further internal or external components. The one or more interfaces 22, 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 24, 34 may be implemented using one or more processing units, one or more circuitries, any means for processing, such as a processor, a computer or a programmable hardware component being operable with accordingly adapted software. In other words, the described function of the one or more processing devices 24, 34 may as well be implemented in software, which is then executed on one or more programmable hardware components. Such hardware components may comprise a general-purpose processor, a Digital Signal Processor (DSP), a micro-controller, etc.

In examples a network entity or node may be any network node in a radio access network (RAN) or core network (CN). For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The mobile communication system 400 may hence be cellular. The term cell refers to a coverage area of radio services provided by a transmission point, a remote unit, a remote head, a remote radio head, communication device, network entity or a BTS, NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, etc. A wireless communication device, e.g. the UE can be registered or associated with at least one cell (e.g., the network entity), e.g., it can be associated to a cell such that data can be exchanged between the network and the mobile in the coverage area of the associated cell using a dedicated channel, connection or link.

In general, the UE may be a communication device that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in or be a part of a vehicle, a car, a bus, a truck, a construction and/or agricultural machinery, a train, an airplane, a boat, a ship, a cruise ship, an Internet of Things (IoT) device, a logistics application, etc. Especially in the case of a smartphone, the communication device may interface with or comprise a high-level operating system (HLOS) or another intermediate layer. The communication device may provide services, especially connectivity services, to applications using the communication device. Applications may interface directly with the communication device, especially via AT (Attention) commands, but also indirectly, especially via an HLOS, and especially via an application programming interface (API).

For example, the communication device and the network entity may be configured to communicate in a cellular mobile communication system. Accordingly, the communication device and the network entity may be configured to communicate in a cellular mobile communication system, for example, in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Further network entities or nodes are those comprised in a core network of the mobile communication system 400, as will be outlined in more details subsequently. Examples provide a method for support of heterogenous QoS deployments in mobile networks.

Network sharing is a strategy in which one or more operators share radio resources in order to offer coverage and/or service using common resources. While reasons for such a strategy can vary, it is generally performed due to efficiency and/or regulatory reasons. Examples of such network sharing using common radio resources can be:
- Coverage of rural areas using common spectrum to be able to offer better coverage to subscribers of all operators in a cost-effective way.
- For legacy technologies, e.g. 2G, to offer coverage/service to legacy devices/customers via common frequencies for all operators, such that only one 2G network needs to be maintained instead of an independent network for each operator. This has obvious benefits in terms of energy efficiency and reduction of required equipment for a legacy technology.

In order to more efficiently utilize resources and offer coverage to all possible users, network sharing is an advantageous option. However, it is difficult apply a QoS mapping on a network mixing RAN-sharing cells and non-RAN-sharing cells. Examples of the present disclosure may enable enhancements to the 5G and other systems to improve deployment of heterogeneous QoS mappings within mobile networks, especially in the case of RAN sharing using multi-operator core network (MOCN).

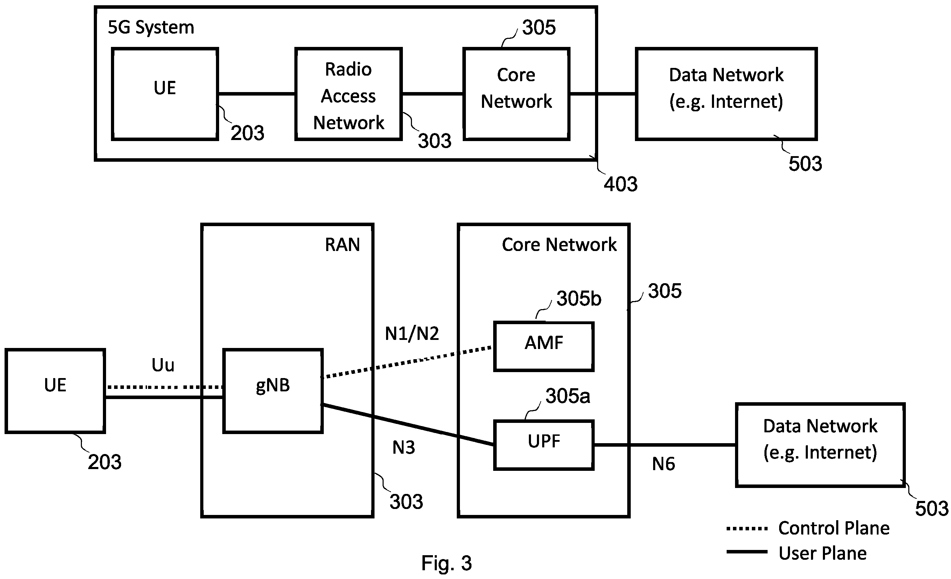

Fig. 3 shows an overview of a 5G system and a data transmission between a UE 203 and a data network 503. At the top Fig. 3 illustrates the current paradigm in which a 5G system 403 comprises (from left to right) a UE 203, a RAN 303, a CN 305 and a data network (DN) 503, which represent a general architecture of mobile networks. The current paradigm divides the mobile network in two main parts: Access Network (AN) and Core Network (CN).

The objective of such mobile network is to provide the UE 203 with connectivity towards the Data Network (DN) 503. Going in more detail, the UE 203 communicates with the RAN 303 via a radio interface, which is used for conveying both signaling information and data traffic. Even if there is a logical separation (logical channels), for obvious reasons both types of data end up being transmitted over the same physical medium.

Between the RAN 303 and the CN 305, signaling information and user data are separated in different interfaces: N1/N2 and N3 in the 5G case, the former running on a SCTP (Stream Control Transmission Protocol)/NG-AP (Next Generation Application Protocol)/NAS (Non Access Stratum) protocol stack and the latter running on a UDP (Universal Datagram Protocol)/GTP-U (GPRS (General Packet Radio Service) Tunneling Protocol - User Plane) protocol stack. Fig. 3 illustrates data transmission between UE 203 and Data Network 503. To establish a data connection enabling the UE 203 to communicate with the DN 503, a PDU (Packet Data Unit) session is required. A PDU session is a logical data transport channel terminated at the CN 305 that provides connectivity to the DN 503. The termination point of a given PDU session, (User Plane Function) (UPF) 305a in Fig. 3, is termed PDU Session Anchor (PSA). The Access and Mobility Management Function 305b (AMF) terminates the control plane in Fig. 3. In order to be able to offer differentiated services, mobile networks provide QoS. Most commonly, a single QoS model is used in a mobile network.

The QoS model used by 5G networks is an evolution of what has been used in prior 3GPP-based systems. More details can be found in clause 5.7 of TS 23.501, https://www.3gpp.org/ftp/Specs/archive/23_series/23.501/23501-i50.zip.

The 5G QoS model is based on QoS Flows. The 5G QoS model supports both QoS Flows that require guaranteed flow bit rate (GBR QoS Flows) and QoS Flows that do not require guaranteed flow bit rate (Non-GBR QoS Flows). The 5G QoS model also supports Reflective QoS, on which details will be provided below. The QoS Flow is the finest granularity of QoS differentiation in the PDU Session. A QoS Flow ID (Identification, QFI) is used to identify a QoS Flow in the 5G System. User Plane traffic with the same QFI within a PDU Session receives the same traffic forwarding treatment (e.g. scheduling, admission threshold). The QFI is carried in an encapsulation header on N3 (and N9), i.e. without any changes to the e2e (end-to-end) packet header.

A QFI has the following qualities:
- QFI shall be used for all PDU Session Types.
- The QFI shall be unique within a PDU Session.
- The QFI may be dynamically assigned or may be equal to the 5QI.

Within the 5GS (5G system), a QoS Flow is controlled by the Session Management Function (SMF) and may be preconfigured, or established via the PDU Session Establishment procedure, or the PDU Session Modification procedure.

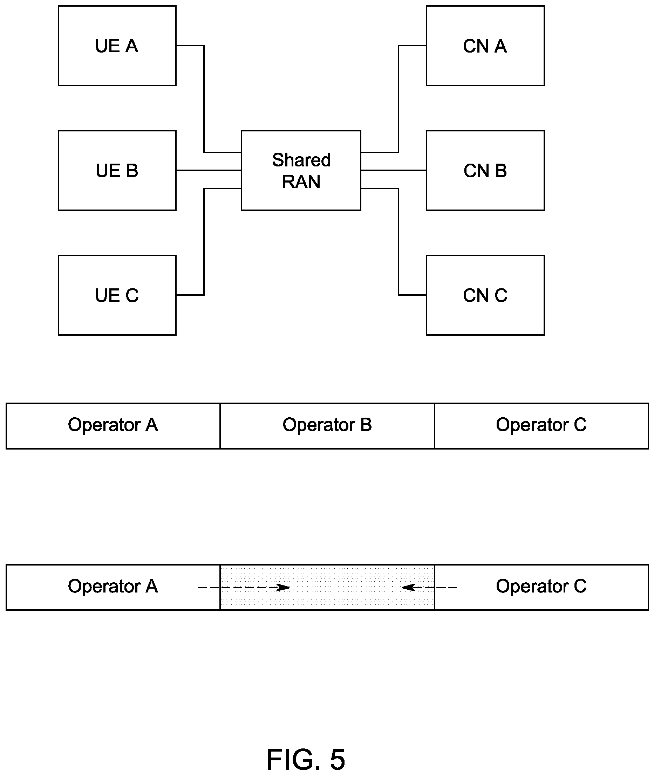

Figure 5.7.1.5-1 in TS 23.501 illustrates a principle for classification and User Plane marking for QoS Flows and mapping. It shows a UE on the left, the AN in the middle and the UPF on the right. More details can be found in https://www.3gpp.org/ftp/Specs/archive/23_series/23.501/23501-j00.zip (Figure 5.7.1.5-1, TS 23.501).

Reflective QoS enables the UE to map uplink (UL) User Plane traffic to QoS Flows without SMF provided QoS rules and it applies for IP (internet protocol) PDU Session and Ethernet PDU Session. This is achieved by creating UE-derived QoS rules in the UE based on the received DL traffic. It shall be possible to apply reflective QoS and non-Reflective QoS concurrently within the same PDU Session.

For a UE supporting Reflective QoS functionality, the UE shall create a UE-derived QoS rule for the uplink traffic based on the received DL traffic if Reflective QoS function is used by the 5GC (5G core) for some traffic flows. The UE shall use the UE-derived QoS rules to determine mapping of UL traffic to QoS Flows.

The UE-derived QoS rule may contain the following parameters:
- One UL Packet Filter (in the Packet Filter Set as defined in clause 5.7.6);
- QFI;
- Precedence value (see clause 5.7.1.9, TS 23.501).

Upon receiving DL packet, one UL Packet Filter derived from the received DL packet as described in this clause is used to identify a UE-derived QoS rule within a PDU Session.

Reflective QoS is controlled on per-packet basis by using the Reflective QoS Indication (RQI) in the encapsulation header on N3 (and N9) reference point together with the QFI and together with a Reflective QoS Timer (RQ Timer) value that is either signaled to the UE upon PDU Session Establishment (or upon PDU Session Modification) or set to a default value. The RQ Timer value provided by the core network is at the granularity of PDU Session.

When the UPF is instructed by the SMF to apply RQI marking, the UPF shall set the RQI in the encapsulation header on the N3 (or N9) reference point for every DL packet corresponding to this SDF (service data flow).

When an RQI is received by (R)AN in a DL (downlink) packet on N3 reference point, the (R)AN shall indicate to the UE the QFI and the RQI of that DL packet.

Upon reception of a DL packet with RQI:
- if a UE-derived QoS rule with a Packet Filter corresponding to the DL packet does not already exist,
   o the UE shall create a new UE-derived QoS rule with a Packet Filter corresponding to the DL packet (as described in clause 5.7.5.2, TS 23.501); and
   o the UE shall start, for this UE-derived QoS rule, a timer set to the RQ Timer value.
- otherwise,
   o the UE shall restart the timer associated to this UE-derived QoS rule; and
   o if the QFI associated with the downlink packet is different from the QFI associated with the UE-derived QoS rule, the UE shall update this UE-derived QoS rule with the new QFI.

In the following Policy Setup/Modification in 5G will be explained. In 5G, policy setup is split into Access and Mobility (AM) and Session Management (SM). AM policy is responsible for ANDSP (Access Network Discovery and Selection Policy) and URSP (UE Route Selection Policy). Other less known AM policies are V2XP (Vehicle-to-Everything Application Protocol), ProSeP (Proximity Services), RSLPP (Radio Link Setup and Release Protocol) and A2XP (Aircraft-to-everything Policy). Further details can be found in TS 23.503, clause 4.2.2, https://www.3gpp.org/ftp/Specs/archive/23_series/23.503/23503-j00.zip.

An AM policy is established between the AMF and PCF (Policy Control Function), see TS 23.502, clause 4.16.1.2, bttps://www.3gpp.org/ftp/Specs/archive/23_series/23.502/23502-j00.zip.

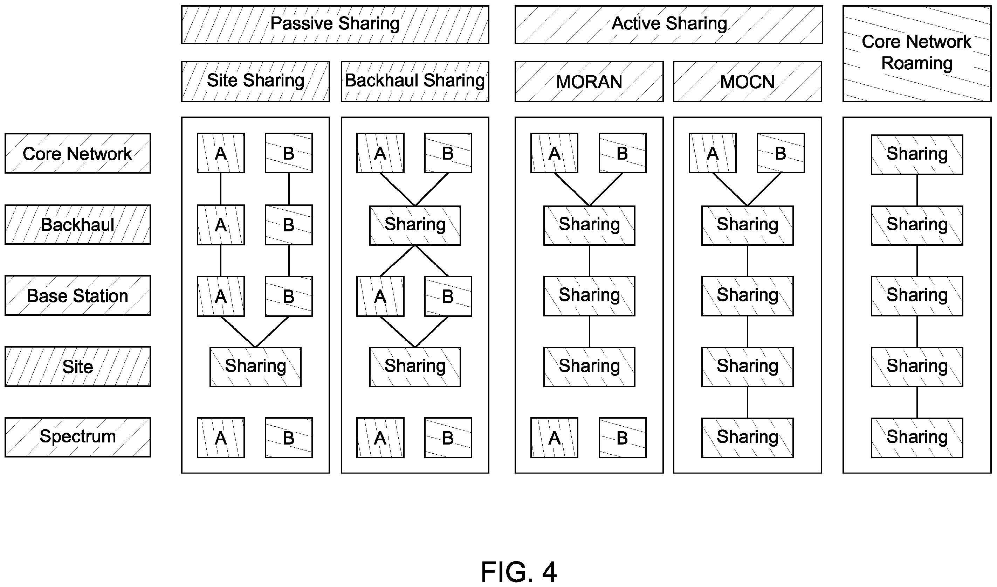

Figure 4.16.1.2-1 of TS 23.502 shows a message sequence chart for AM Policy Association Establishment and Figure 4.16.2.1.1-1 of TS 23.502 shows AM Policy Association Modification initiated by the AMF. As shown in Figure 4.16.1.2-1 of TS 23.502 the AMF decides to establish the AMF Policy Association in step1 and sends an according create message to the PCF or Visited PCF (V-PCF) in step 2. The PCF then returns a create response message in step 3. In step 4 access and mobility related policy information is deployed. Further details can be found in TS 23.502, Figure 4.16.1.2-1 and the related description. The respective policy information can also be modified as shown in Fig. 4.16.2.1.1-1 of TS 23.502. The AMF sends an update request in a first step and the (V(Visited))-PCF decides on a policy in the second step before sending an update response in the third step. In step 4 access and mobility related policy information is deployed. The policy information can also be modified/triggered by the AMF or PCF, as shown in TS 23.502, clause 4.16.2.1.1, Figure 4.16.2.1.1-1. Figure 4.16.2.2-1 of TS 23.502 shows a message sequence chart for AM Policy Association Modification initiated by the PCF and Figure 4.16.4-1 of TS 23.502 shows a message sequence for SM Policy Association Establishment. At the (V-)PCF an internal event occurs in a first step and a policy decision is made in a second step. An update notification is then sent to the AMF in the third step. Again, in step 4 access and mobility related policy information is deployed.

SM (session management) policy is responsible for (among other things), the QoS control at QoS Flow level. Typically, the QoS applied to a given PDU session is assigned by means of rules in the PCF. The SM policy establishment is shown in TS 23.502, clause 4.16.4, Figure 4.16.4-1. In step 1 the SMF rends a create message to the PCF, which subsequently queries and obtains subscription information from the Unified Data Repository (UDR). In a third step an initial spending limit report is retrieved before a policy decision is made in step 4. A create response message is then sent from the PCF to the AMF in step 5. The SM policy can also be modified, initiated either by the SMF or by the PCF, see TS 23.502, clauses 4.16.5.1, 4.16.5.2. Figure 4.16.5.1-1 of TS 23. 502 depicts a message sequence chart for SMF-initiated SM Policy Association Modification and Figure 4.16.5.2-1 of TS 23.502 shows a message sequence for PCF-initiated SM Policy Association Modification (bottom).

In the following some of the 5G QoS parameters will be described. A 5QI (5G QoS Identifier) is a scalar that is used as a reference to 5G QoS characteristics, i.e. access node-specific parameters that control QoS forwarding treatment for the QoS Flow. It is equivalent to 4G's QCI (QoS Class Identifier) parameter.

Standardized 5QI values have a one-to-one mapping to a standardized combination of 5G QoS characteristics as specified in TS 23.501. The 5G QoS characteristics for pre-configured 5QI values are pre-configured in the AN. The 5G QoS characteristics for QoS Flows with dynamically assigned 5QI are signaled as part of the QoS profile. On N3, each PDU (i.e. in the tunnel used for the PDU Session) is associated with one 5QI via the QFI carried in the encapsulation header.

The following Table details the standardized 5QI values, as well as their mapping to QoS characteristics, see Table 5.7.4-1 of TS 23.501.

| **5QI Value** | **Resource Type** | **Default Priority Level** | **Packet Delay Budget** | **Packet Error Rate** | **Default Maximum Data Burst Volume** | **Default Averaging Window** | **Example Services** |
|---|---|---|---|---|---|---|---|
| 1 | GBR | 20 | 100 ms | 10⁻² | N/A | 2000 ms | Conversational Voice |
| 2 | | 40 | 150 ms | 10⁻³ | N/A | 2000 ms | Conversational Video (Live Streaming) |
| 3 | | 30 | 50 ms | 10⁻³ | N/A | 2000 ms | Real Time Gaming, V2X messages (see TS 23.287 [121]). |
| | | | | | | | Electricity distribution - medium voltage, Process automation monitoring |
| 4 | | 50 | 300 ms | 10⁻⁶ | N/A | 2000 ms | Non-Conversational Video (Buffered Streaming) |
| 65 | | 7 | 75 ms | 10⁻² | N/A | 2000 ms | Mission Critical user plane Push To Talk voice (e.g. MCPTT) |
| 66 | | 20 | 100 ms | 10⁻² | N/A | 2000 ms | Non-Mission-Critical user plane Push To Talk voice |
| 67 | | 15 | 100 ms | 10⁻³ | N/A | 2000 ms | Mission Critical Video user plane |
| 75 | | 25 | 50 ms | 10⁻² | N/A | 2000 ms | V2X messages (see TS 23.287 [121]). |
| | | | | | | | A2X messages (see TS 23.256 [136]) |
| 71 | | 56 | 150 ms | 10⁻⁶ | N/A | 2000 ms | "Live" Uplink Streaming (e.g. TS 26.238 [76]) |
| 72 | | 56 | 300 ms | 10⁻⁴ | N/A | 2000 ms | "Live" Uplink Streaming (e.g. TS 26.238 [76]) |
| 73 | | 56 | 300 ms | 10⁻⁸ | N/A | 2000 ms | "Live" Uplink Streaming (e.g. TS 26.238 [76]) |
| 74 | | 56 | 500 ms | 10⁻⁸ | N/A | 2000 ms | "Live" Uplink Streaming (e.g. TS 26.238 [76]) |
| 76 | | 56 | 500 ms | 10⁻⁴ | N/A | 2000 ms | "Live" Uplink Streaming (e.g. TS 26.238 [76]) |
| 5 | Non-GBR | 10 | 100 ms | 10⁻⁶ | N/A | N/A | IMS Signalling |
| 6 | | | | | N/A | N/A | Video (Buffered Streaming) |
| | | 60 | 300 ms | 10⁻⁶ | | | TCP-based (e.g. www, e-mail, chat, ftp, p2p file sharing, progressive video, etc.), AI/ML model download for image recognition (e.g. for model topology) (see TS 22.261 [2]) |
| 7 | | | | | N/A | N/A | Voice, Video (Live Streaming) |
| | | 70 | 100 ms | 10⁻³ | | | |
| | | | | | | | Interactive Gaming, AI/ML model download for image recognition (e.g. for model weight factors) (see TS 22.261 [2]) |
| 8 | | 80 | 300 ms | 10⁻⁶ | N/A | N/A | Video (Buffered Streaming) TCP-based (e.g. www, e-mail, chat, ftp, p2p file sharing, progressive |
| 9 | | 90 | | | | | video, etc.) |
| 10 | | 90 | 1100ms | 10⁻⁶ | N/A | N/A | Video (Buffered Streaming) |
| | | | | | | | TCP-based (e.g. www, e-mail, chat, ftp, p2p file sharing, progressive video, etc.) and any service that can be used over satellite access type with these characteristics |
| 69 | | 5 | 60 ms | 10⁻⁶ | N/A | N/A | Mission Critical delay sensitive signalling (e.g. MC-PTT signalling) |
| 70 | | 55 | 200 ms | 10⁻⁶ | N/A | N/A | Mission Critical Data (e.g. example services are the same as 5QI 6/8/9) |
| 79 | | 65 | 50 ms | 10⁻² | N/A | N/A | V2X messages (see TS 23.287 [121]) |
| 80 | | 68 | 10 ms | 10⁻⁶ | N/A | N/A | Low Latency eMBB applications Augmented Reality |
| 82 | Delay-critical GBR | 19 | 10 ms | 10⁻⁴ | 255 bytes | 2000 ms | Discrete Automation (see TS 22.261 [2]) |
| 83 | | 22 | 10 ms | 10⁻⁴ | 1354 bytes (NOTE 3) | 2000 ms | Discrete Automation (see TS 22.261 [2]); V2X messages (UE - RSU Platooning, Advanced Driving: Cooperative Lane Change with low LoA. See TS 22.186 [111], TS 23.287 [121]) |
| 84 | | 24 | 30 ms | 10⁻⁵ | 1354 bytes (NOTE 3) | 2000 ms | Intelligent transport systems (see TS 22.261 [2]) |
| 85 | | 21 | 5 ms | 10⁻⁵ | 255 bytes | 2000 ms | Electricity Distribution-high voltage (see TS 22.261 [2]). |
| | | | | | | | V2X messages (Remote Driving. See TS 22.186 [111], NOTE 16, see TS 23.287 [121]). |
| | | | | | | | Split AI/ML inference - DL Split AI/ML image recognition, (see TS 22.261 [2]) |
| 86 | | 18 | 5 ms | 10⁻⁴ | 1354 bytes | 2000 ms | V2X messages (Advanced Driving: Collision Avoidance, Platooning with high LoA. See TS 22.186 [111], TS 23.287 [121]) |
| 87 | | 25 | 5 ms | 10⁻³ | 500 bytes | 2000 ms | Interactive Service - Motion tracking data, (see TS 22.261 [2]) |
| 88 | | 25 | 10 ms | 10⁻³ | 1125 bytes | 2000 ms | Interactive Service - Motion tracking data, (see TS 22.261 [2]), split AI/ML inference - UL Split AI/ML image recognition, (see TS 22.261 [2]) |
| 89 | | 25 | 15 ms | 10⁻⁴ | 17000 bytes | 2000 ms | Visual content for cloud/edge/split rendering (see TS 22.261 [2]) |
| 90 | | 25 | 20 ms | 10⁻⁴ | 63000 bytes | 2000 ms | Visual content for cloud/edge/split rendering (see TS 22.261 [2]) |

ARP (Allocation and Retention Priority) is another QoS parameter and contains information about the priority level, the pre-emption capability and the pre-emption vulnerability. This allows deciding whether a QoS Flow establishment/modification/handover may be accepted or needs to be rejected in the case of resource limitations (typically used for admission control of GBR (guaranteed bit rate) traffic). It may also be used to decide which existing QoS Flow to pre-empt during resource limitations, i.e. which QoS Flow to release to free up resources.

The Reflective QoS Attribute (RQA) is an optional parameter which indicates that certain traffic (not necessarily all) carried on this QoS Flow is subject to Reflective QoS. Only when the RQA is signaled for a QoS Flow, the (R)AN enables the transfer of the RQI for AN resource corresponding to this QoS Flow. The RQA may be signaled to NG-RAN via the N2 reference point at UE context establishment in NG-RAN and at QoS Flow establishment or modification.

QoS is used in practice by operators. While 3GPP defines standardized QCI (in this document QCI (4G term) and 5QI (5G term) are used interchangeably) values, operators typically define QCI mappings based on their business needs. In most cases (but not necessarily) based on the standardized QCI values. Often also, operator-specific QCI values are defined that also overlap the standardized QCI range. It is even possible that (often due to regulatory reasons) different QCI mappings are used for 4G and 5G (QCI and 5QI can be mapped between each other).

When looking at QoS mappings from different operators, in Austria for example, it can be found that different QoS mappings are used. In this specific example, operators are not mandated to publicly release their QCI mappings. However, they are mandated to publish their QoS classification. From the different classifications, it is a fair assessment that the underlying QCIs are different. Signaling/Voice traffic is typically assigned standardized QCI values. For example, 11 categories are used and each category depicts a priority ratio. Each contract/tariff is assigned to a given category. However, these assignments may differ among different operators.

Some operators may offer two product categories (e.g. mobile and stationary), each with different priority ratios. Additionally, the prioritization can be based on the contract's maximum download speed. Prioritization may be based on the tariffs maximum download speed or different performance profiles may be used; each assigned a different priority ratio. Additionally, ratio 2:1 between stationary and mobile tariffs. More details can be found in:
https://www.al.net/ueber-al/netz/bandbreiten-service ;
https://www.magenta.at/internet/bandbreitenoptimierung ;
https://www.drei.at/de/info/nutzungsklassen/netzwerkmanagement-bis-14-februar-2024.html.

Network sharing is when two or more (mobile) network operators decide to share infrastructure in order to each offer service to their own subscribers. Several options exist for network sharing. Passive sharing has none to minimal impact for the network deployment. Sharing of physical infrastructure such as antenna masts is broadly done, as well as shared (e.g. leased) transport links. Two models that are widely discussed are MORAN (multi operator RAN) and MOCN (multi operator CN). They both refer to sharing of RAN infrastructure by several operators. In MORAN, each operator uses their own spectrum, while in MOCN spectrum is also shared. More details can be found in:
5G Network Co-Construction and Sharing Guide Whitepaper, GSMA, https://www.gsma.com/solutions-and-impact/technologics/networks/gsma resources/5g-network-co-construction-and-sharing-guide-whitepaper/;
https://www.gsma.com/solutions-and-impact/technologies/networks/wp-content/uploads/2023/02/5G-NCCS GSMA-Guide 27.02.2023.pdf.

Fig. 4 shows different network sharing models in examples. Fig. 4 depicts a table view of different sharing options. The rows show core network, backhaul, base station, site and spectrum. The first two columns are directed to passive sharing, which is further subdivided in site sharing (only the side is shared between operator A and B) and backhaul sharing (side and backhaul are shared between operators A and B). The next two columns show active sharing, which is further subdivided in MORAN (backhaul, base station and site are shared) and MOCN (MORAN with additionally shared spectrum). The column on the very right illustrates core network roaming in which in addition to MOCN the core network is also shared.

Combined with cost-effectiveness, the following drivers exist, which can drive RAN sharing, especially MOCN:
- Serving users with lifespans longer than mobile network generations: With each new mobile network generation, legacy systems remain, leading to parallel network generations (and equipment) running in parallel. It could be advantageous to serve legacy users on legacy technologies with a common network. While some devices/users, such as typical consumer users, can be upgraded, some devices, such as embedded and/or IoT devices cannot. While they may not require a very differentiated service portfolio (by today's standards), they do require coverage.
- Additionally, regulatory obligation may be present requiring coverage (e.g. of a specific technology) on certain geographies. This can be more optimally achieved by sharing infrastructure, especially for legacy technologies.
- With MOCN, since spectrum is shared, it is possible to free some spectrum for other uses, such as broadband (mobile) Internet for existing subscribers or to pool spectrum together (e.g. N GSM (2G) bands vs. one shared GSM band).

It is thus a fact, that for some cases it is advantageous for (mobile) operators, as well as for customers, to share infrastructure, especially RAN:
RAN sharing may be advantageous for some geographical areas and/or specific technologies. But rarely for the whole of the operator. An operator without its own RAN is, by definition, an MVNO (mobile virtual network operator).

In the following a situation, Operator A, Operator B and Operator C share RAN resources and the MOCN model is assumed. In this case, the CN of each of the operators' is connected to the (shared) RAN, which is used to serve subscribers from each operator on a common spectrum.

Fig. 5 illustrates a MOCN serving UEs of operators A, B, C via shared RAN (top), Resource allocation for shared RAN (center), and Resource assignment (bottom). At the top, Fig. 5 illustrates UEs A, B, C, which use the same shared RAN to communicate with three CNs A, B, C. To allow for a fair allocation of radio resources, each operator is assigned a part of the spectrum it is guaranteed. When the cell is loaded, each operator is guaranteed to be able to use at least its guaranteed part. This scenario is illustrated in the center of Fig. 5, where each of the operators gets the same share.

When the cell is fully loaded, regardless of what QCI each operator applies, resources are allocated among operators fairly, i.e. each operator gets its promised share of the common resources. If the cell is not fully loaded, it can be assumed, for example and for simplicity, that there is no traffic for operator B. The cell's aim is to use radio resources as efficiently as possible. Empty resources can be assigned to the operators sharing the RAN as long as its own "guaranteed owner" is not using them. In this case, the free resources can be assigned to operator A or operator C. This scenario is illustrated at the bottom of Fig. 5. If operator A and operator C use the same QoS mapping (i.e. the same QCIs), the scheduler will be able to fairly (and simply) assign resources to each operator in a fair way. If QCIs are not harmonized between operators, it cannot be guaranteed that the scheduler can assign fairly among the operators sharing the RAN any free resources beyond the guaranteed ones (i.e. a common metric is required to schedule over a common resource).

Two simple solutions may be used for the shared RAN. One solution is to harmonize QCIs, such that all operators using the shared RAN can be fairly scheduled. It could also be argued that an alternative solution would be to have a RAN that can fairly assign resources among operators using different QoS mappings (e.g. a two-step scheduling or other similar methods). However, such a solution would require a specialized RAN scheduling algorithm, and the scheduler is one of the most central parts in a RAN node. It would be difficult to deploy such a solution for the following reasons:
- It is (very) seldom the case that a neutral shared host is created. Typically, the shared RAN infrastructure is owned by one of the operators.
- The RAN owner would be required to choose a RAN product supporting this functionality, so that it can serve other operators.
- This feature would only be of use for a small part of the network, but it could not be ascertained at purchasing time how much geographical coverage this feature would require.
- Worst case, deployment of RAN sharing would require the deployment/replacement of RAN equipment on top of a planned deployment.

Hence, it is more advantageous to choose a solution without RAN impact.

It is necessary for operators sharing RAN resources to ensure that there is a fair sharing of RAN resources, both when the cell is fully loaded and when it is not. Otherwise, some operators could get a "free(er) ride" than others and the value of RAN sharing is degraded.

Additionally, it is not realistic to expect a network operator to change the QoS of its whole network just to accommodate RAN sharing is some part of its network.

As such, the following problem exists:
- How to ensure that shared radio resources are assigned fairly among operators in a RAN sharing scenario,
- for a given operator and a given heterogenous QoS mapping, i.e.:
   - a given QoS mapping in RAN sharing cells/Tracking Areas (TAs) (It is assumed that RAN sharing is performed in only part of the network. It is considered that specific cells and/or Tracking Areas (groups of cells) are assigned as "RAN sharing".), which is termed "harmonized QoS mapping", (e.g. all operators use the same QCI/5QI mapping in cells that are shared)
   - and an operator-specific QoS in non-RAN-sharing cells/TAs.

In the following (realistic) situation, a UE of operator A moves from a "normal" cell (or TA) to one with RAN sharing.

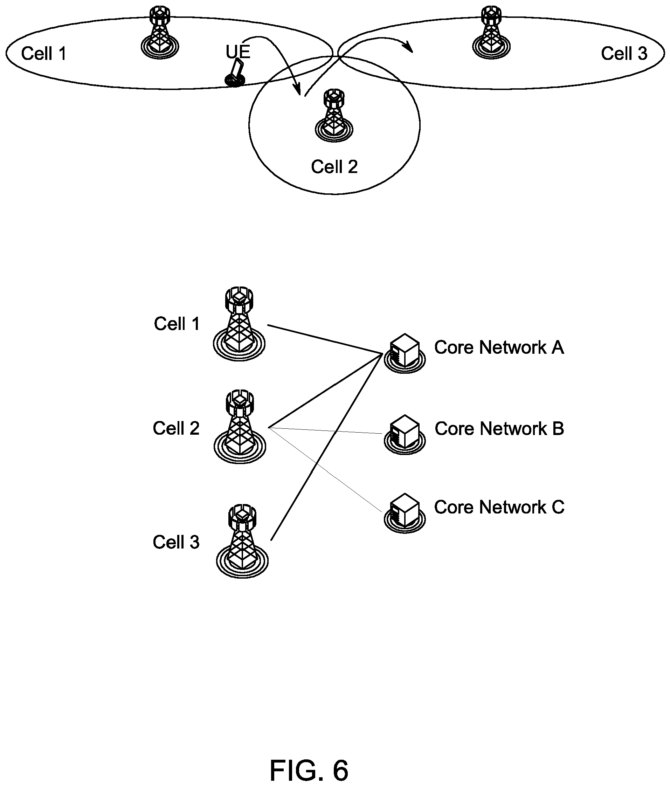

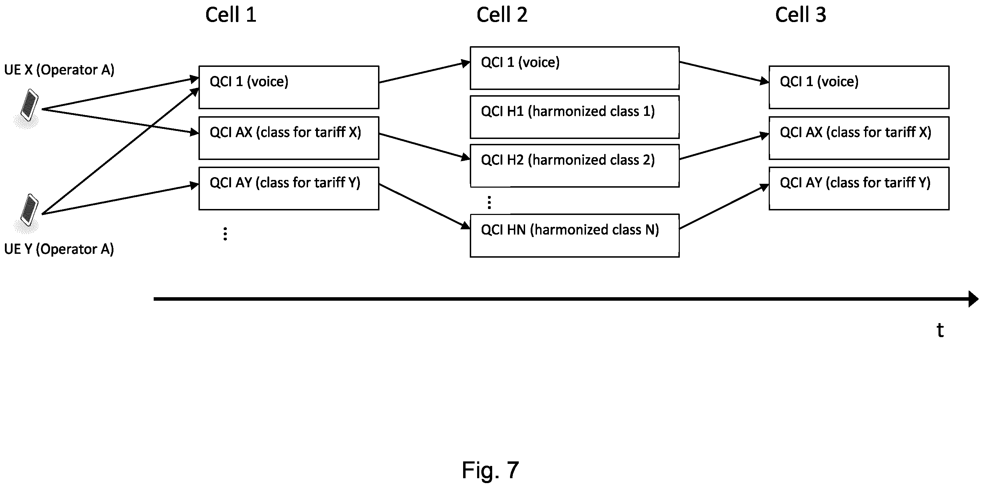

Fig. 6 illustrates UE mobility between cells not using RAN sharing (top) and cells using RAN sharing (bottom). Fig. 6 shows three cells, Cell 1, Cell 2 and Cell 3. A UE is located in Cell 1, then moves to Cell 2, and further to Cell 3. In this example, Cell 2 is a RAN sharing cell and all the operators sharing this cell agreed to using a common QoS mapping. At the bottom Fig. 6 illustrates that cells 1 and 3 are connected to core network A, while Cell 2 is shared among core networks A, B, and C. Thus, for a UE moving between cells, the QoS for QoS flows and/or PDU sessions needs to be updated according to where the UE is connected to. Fig. 7 shows QoS change while moving between cells in an example. Fig. 7 shows at the very left two UEs X and Y, which are both served by Operator A. Both UEs use two QoS flows: UE X and UE Y both use QCI 1 for a voice service. UE X further uses QCI AX, which is the class for tariff X. UE Y uses QCIA AY, which is the class for tariff Y. When the UEs move to the shared Cell 2 QCI 1 is mapped to QCI 1 for voice. QCI AX is adapted to QCI H2, which is a harmonized class 2 in Cell 2. QCI AY is adapted to QCI HN, which is harmonized class N. When the UEs proceed to Cell 3 the QoS mapping is adapted back to where it was before at Cell 1. Cell 3 is a cell operated by Operator A only just like Cell 1. In this example, the first and second radio cells (Cell 1, Cell 2) use the same radio access technology and the second cell is a cell shared among multiple operators, especially three or more operators as described above with the help of Fig. 5. The UE is serviced by the same operator in the first and second radio cells. However, the QoS mapping is adapted in the second cell to assure fair (harmonized) scheduling among the sharing operators. Examples also provide a UE communicating via one or more QoS flows and moving from Cell 1 to another Cell 2. Cell 1 and Cell 2 use the same RAT (radio access technology). The QoS mapping of Cell 1 is compared with the QoS mapping of Cell 2. The QoS of QoS flows is adapted in accordance with QoS mapping of Cell 2 since the QoS mapping of Cell 1 is different to QoS mapping of Cell 2.

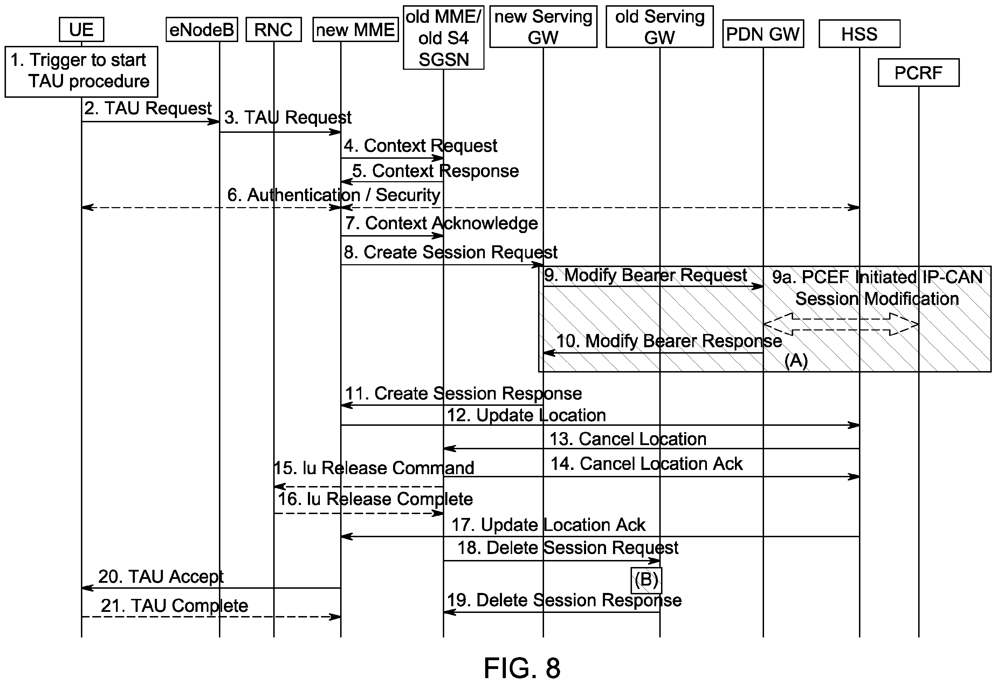

It may be also possible to implement that for each time the UE notifies a Tracking Area update (applies to 4G, but is also applicable to other systems), the MME (Mobility Management Entity)-Gateway retrieves from the PCRF (Policy and Charging Rules Function) the QoS mapping. This is the case for 4G, where the Tracking Area Update procedure, e.g. clause 5.3.3.1 of TS 23.401, contains in step 9 provisions for the (P-)GW (Packet data network Gateway) to interact with the PCRF of a policy session modification. Fig. 8 depicts a message sequence chart of a Tracking Area Update procedure with Serving GW change (4G), cf. Figure 5.3.3.1-1 of TS 23.401, https://www.3gpp.org/fb/Specs/archive/23 series/23.40 1/23401-i60.zip .

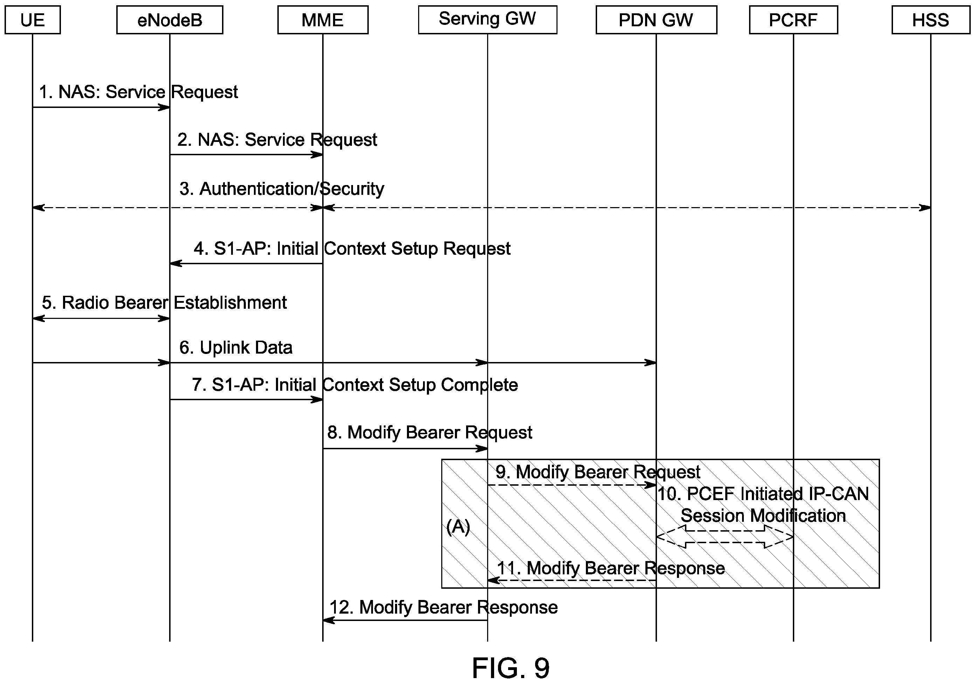

A similar step (step 10) also exists in the UE triggered Service Request procedure (equivalent to PDU session establishment in 5G). Fig. 9 shows a message sequence chart of a UE triggered Service Request procedure, see Figure 5.3.4.1-1 of TS 23.401. In existing (4G) systems, a simple solution could be to always perform step 9a in the case of a TA update, irrespective of whether there is a GW change. This is, however, highly inefficient in terms of signaling (it can severely increase the amount of signaling generated by the TA Update arriving at the MME and the messages processed by the PCRF). Furthermore, it is not trivial to apply this approach to 5G, as the PCF is based on NF (network function) services, and AM policies are clearly separated from SM policies.

Examples may provide complementary approaches for support of heterogeneous QCI deployments. For example, core-network-based QCI reassignment/remapping may be used. The adapting 13, as outlined above with respect to Fig. 1, of the QoS parameters may comprise triggering a QoS adaption procedure in a core network part of the mobile communication system. For example, the adapting 13 of the QoS parameters comprises triggering one or more elements of the group of a session management policy change procedure, an access and mobility management function procedure, or a policy and charging rules function procedure of the mobile communication system. Hence, some examples enhance the AMF, SMF, PCF, such that a trigger related to AM policies (location change) can be used by the PCF to update SM policies. Currently, there is a separation of the AM and SM logic that does not currently consider the AMF for SM logic.

At least some examples use an SM policy change triggered based on AM trigger. These examples provide a flow that enables the AMF to trigger a SM policy change. It allows the CN to (re-)set QCI values based on mobility information instead of having the AMF constantly retrieving the QoS mapping on each mobility event.

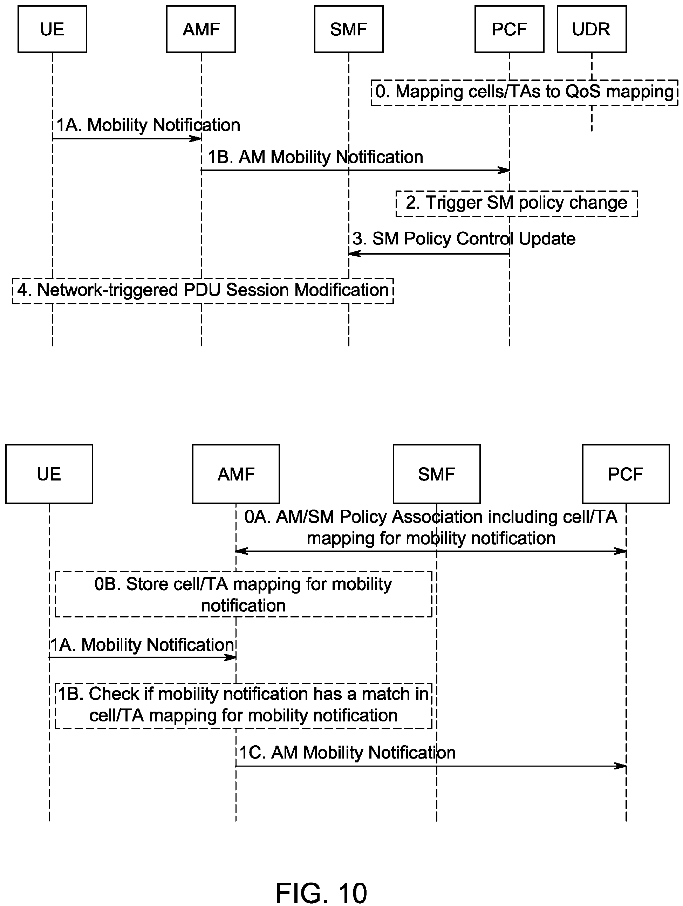

Fig. 10 illustrates message sequence charts of an SM policy change based on AM trigger (top) and AMF-based filtering based on mobility information (bottom). As shown in Fig. 10 at the top the following steps are part of an example method:
0. A mapping between QoS mapping and cell(s) (QoS mapping information) is stored in the CN, especially the PCF and/or UDR (The UDR stores policy information for the PCF, which retrieves it and applies it as needed (e.g. URSP rules for a given subscriber)). Information considered for the mapping (one or more) may include:
   a. Mapping conditions:
      i. Cell(s), group(s) of cells (especially expressed as a TA or list of TAs) to which the mapping applies, considers also the use of wildcards.
      ii. Geographical area to which the mapping applies, which can be a posteriori mapped to cell(s).
      iii. Combination of to/from cell(s)/group(s) of cells.
      iv. RAT(s) and/or RAT type(s) to which the mapping applies.
      v. Subscriber(s) to which the mapping applies.
      vi. Time validity information.
      vii. QoS values and/or flows to which the mapping applies.
      viii. PDU session(s) to which the mapping applies.
      ix. Slice(s) to which the mapping applies.
      x. (V-)PLMN(s) to which the mapping applies.
   b. QoS mapping:
      i. QoS per flow (i.e. fine granularity): QoS of the service data flows that are applicable to the QoS Flow and on criteria such as the QoS subscription information, service-based policies, and/or predefined PCF internal policies (Enhancement of TS 23.503, clause 4.3.3.2.2, https://www.3gpp.org/ftp/Specs/archive/23_series/23.503/23503-j00.zip)
      ii. QoS per PDU session (i.e. coarse granularity): the authorized Session-AMBR values, default 5QI/ARP combination for PDU Session of IP type, Ethernet type and unstructured type unconditionally or conditionally, i.e. per PDU Session type and/or RAT type (enhancement of TS 23.503, clause 4.3.3.2.3)
1. When the UE moves from Cell 1 to Cell 2, the UE notifies the CN of a mobility event including the new location, especially a registration with reason mobility (5G) or a Tracking Area Update (TAU) (4G), the AMF notifies the policy function (PCF in 5G, PCRF in 4G) of the mobility event including the new location of the UE.
2. The policy function checks whether the location change results in a change of the QoS mapping and if yes, triggers a SM policy change.
3. The policy function notifies the session management function, especially SMF, of a policy control update.
4. A PDU session modification (network-triggered) is triggered, which updates the QoS mapping of existing PDU session(s) and/or QoS flows for the UE.

Some further examples use AMF-based filtering, which can be based on mobility information. Some examples may enhance existing mechanisms but have the potential to increase signaling between AMF and PCF. UEs do move a lot and the potential for an excessive, potentially overloading number of mobility notifications is high. This enhancement to the proposed examples provides the added benefit of reducing the amount of produced signaling within the CN. Fig. 10 shows at the bottom a message sequence that enables AMF-based filtering based on mobility information. The sequence comprises the following steps:
0. A QoS mapping and cell(s) is stored in the AMF for a given UE. The following procedures are considered for storing the QoS mapping information in the AMF:
   a. Via local configuration and/or OAM (operation and maintenance), the AMF is provided with the condition(s) under which the PCF should be notified of a mobility event.
   b. As part, or after AM policy association, the AMF is provided by the PCF with the QoS mapping information for this subscriber.
   c. As part, or after SM policy association, the AMF is provided by the PCF with the QoS mapping information for this PDU session and/or associated QoS flows.
1. When receiving a mobility event from the UE (1A in Fig. 10), the AMF checks (1B in Fig. 10) whether the conditions to notify the PCF are met, and if yes, notifies the PCF (1C in Fig. 10).

In this example, the method 10 may further comprise filtering the cell change event based on a mobility filter policy to determine whether the QoS mapping of the second radio cell is different (conditions to notify the PPCF are met).

Additionally, this solution could also be applied to 4G systems, whereas the MME only triggers the serving GW to initiate IP-CAN (IP (Internet Protocol) Connectivity Access Network) session modification if the conditions are met.

Additionally or alternatively, some examples may enable UE selection or subscription-based steering. It may also be considered that not all subscribers may need such a feature (e.g. some 5G-only subscribers vs. other subscribers enabled for different RATs or RAT types).

For further optimization, some examples consider that NFs, especially AMF, SMF, PCF can register their support for heterogeneous QoS deployments when registering their NF profile in the NRF. Additionally, registered subscriber information may contain whether a given UE is enabled/requires support for heterogeneous QoS deployments. The method 10 then further comprises registering support of heterogeneous QoS deployment of network functions of the mobile communication system at a network repository function and/or registering whether a UE needs support of heterogeneous QoS deployments. Then, based on the subscriber information, an AMF can select a SMF/PCF that supports this feature if the UE requires it based on subscriber information. Similarly, the SMF can choose a suitable PCF (the AM-PCF may not be the same as the SM-PCF). In general, the adapting 13 of the QoS parameters may comprise triggering a preconfigured or appropriate network function.

Further examples may, additionally or alternatively, enable UE-based QCI reassignment. A network-based solution may keep logic centralized in the CN, albeit at the cost of higher complexity, broad impact in terms of logic (mobility, session, and policy components are involved in the logic), as well as potential scalability as UE behavior triggers a cascade of signaling between different control plane elements in the CN.

While a purely network-based solution can be more easily applied to legacy/existing systems (even if it impacts many elements in the CN), a UE-based solution can be (also complementarily) implemented in future 5G iterations and/or 6G to achieve a more versatile, flexible, and load-distributed solution. Such examples may allow the UEs to share the load of a feature instead of centralizing everything in the CN. Some examples therefore provide a UE QoS Selection Policy (UQSP) enhancement for URSP framework. The adapting 13 of the QoS parameters may hence comprise adapting the QoS parameter at the UE based on a (pre-)configured UE QoS selection policy, e.g. based on a local configuration).

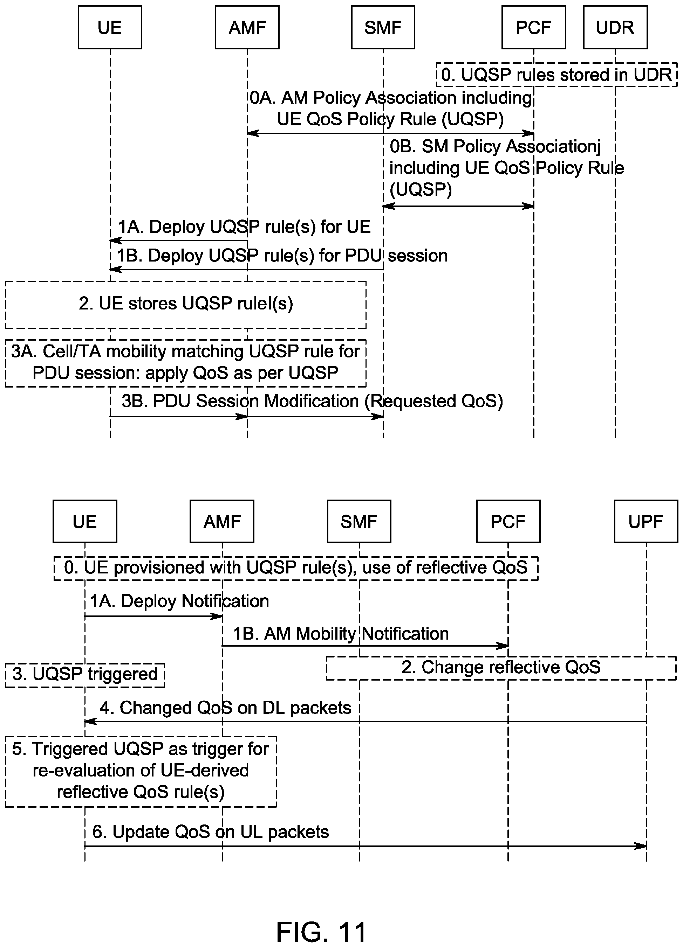

The URSP rule framework is currently used to route application data over existing PDU sessions. It can also be used to trigger the establishment of a PDU session. One or more URSP rules can be present in a UE at a given time, and their triggering can be based on conditions such as time and/or location. Some examples may enhance the URSP framework to enable the deployment of UE QoS Selection Policy (UQSP), realized by deploying UQSP rules in the UE. Fig. 11 shows message sequence charts of a UE-based (UQSP) procedure (top) and of a UE-based (UQSP) procedure with reflective QoS (bottom).

Fig. 11 shows at the top the following steps:
0. UQSPs use a policy functionality, which is based on the policy function, especially on PCF. These examples consider that, as with other policy information, UQSP rules are stored in the UDR. UQSP information considers the same mapping conditions as in the network variant above. A UQSP rule is deployed such that when the UE enters a RAN sharing area, the UQSP rule instructs the UE to change the QoS mapping to match that of the RAN sharing area and/or when the UE leaves the RAN sharing area, the QoS mapping is changed back to the one matching the non-RAN-sharing area. Two variants of UQSP association are considered:
   A. As enhancement of UE policy association. This has the advantage that UQSP rules can be provisioned at the same time URSP rules are provisioned, reusing existing CP means of provisioning policy data, especially UE Configuration Update (UCU).
   B. As enhancement of SM policy association. This has the advantage that UQSP rules can be associated to a given PDU session. The UQSP rules can also be provisioned reusing existing CP means, especially a PDU session establishment response, although a separate NAS message (e.g. UCU parallel or after the PDU session establishment) is also considered.
1. UQSP rules are deployed based on the chosen variant:
   A. As part and/or after UE policy establishment, UQSP rules are sent to the UE from the PCF via the AMF, especially within or associated to a UE policy section, as well as associated to a UE Policy Section Identifier (UPSI).
   B. As part and/or after SM policy establishment, UQSP rules are sent to the UE from the PCF via the SMF (in turn via the AMF), especially within or associated to a PDU session establishment confirmation message. This solution considers the inclusion of a UE policy section within the PDU session establishment message.
   The method 10 then further comprises signaling the UE QoS selection policy to the UE as part of a control plane message. Examples are UE configuration update message, a UE QoS update message, a UE parameter update or packet data unit session establishment message.
2. The UE stores the received UQSP rule(s)
   A. In this case, the UQSP rule(s) are associated to the network that provisioned the rule(s), as is the case with URSP rules.
   B. In this case, the UQSP rule(s) are associated not only to the network, but also to a PDU session and/or QoS flows of the PDU session.
3. When the UE moves into the RAN sharing area, the matching UQSP rule is triggered, resulting in a PDU session modification changing the QoS of the matching PDU session and/or QoS flow(s)

Hence, in some examples the method 10 may comprise associating a UE QoS selection policy rule with a given network, a network selection mode, a packet data unit session, and/or a QoS flow.

Some examples may use reflective QoS. An additional, and relatively efficient manner in which UQSPs can be leveraged is by combining it with reflective QoS. Reflective QoS works by design based on timers, such that no CP information is required. While this approach is very simple and leverages reflective QoS functionality, it can only be applied to QoS flows that use reflective QoS. An according message sequence is shown in Fig. 11 at the bottom and it comprises the following steps:
0. A UQSP rule provisioned in the UE instructing the UE to re-evaluate UE-derived reflective QoS rule(s) (instead of changing the QoS to a specific value/specific values), whereas the present example additionally considers additional filters such that not all rules are evaluated, but only those related to a specific PDU session and/or QoS flows. Reflective QoS is used in associated QoS flow(s). The following behaviors may be considered for UE-derived rule re-evaluation (The UE cannot know when exactly to expect the DL packets with the changed QoS values):
   a. Check associated DL packets for a time, based on a pre-configured timer (e.g. 10 seconds).
   b. Check associated DL packets after a pre-configured timer (e.g. 10 seconds).
   c. Check associated DL packets immediately (E.g. if the CN predicted the mobility event, e.g. by being notified of a handover preparation by RAN).
1. A mobility notification is generated by the UE. The AMF notifies the PCF of the mobility event.
2. The mobility to event indicates that the UE has entered a RAN sharing area. The PCF triggers a change on the downlink (DL) reflective QoS (involves SMF/PCF/UPF).
3. Based on the mapping condition(s) of the UQSP rule, the UE triggers a re-evaluation of UE-derived reflective QoS rule(s) matching the triggered UQSP rule.
4. DL packets arrive at the UE with the new QoS reflecting the QoS mapping of the RAN sharing area. The adapting 13 of the QoS parameters then comprises adapting the QoS parameters at the UE based on a changed QoS parameter indication received in a downlink user and/or control plane transmission.
5. The UE re-evaluates UE-derived reflective QoS rule(s) associated with the received packets.
6. Uplink (UL) packets are sent with the new QoS values matching those of the DL packets.

The method 10 may comprise indicating to a network whether a UE supports QoS change triggering.

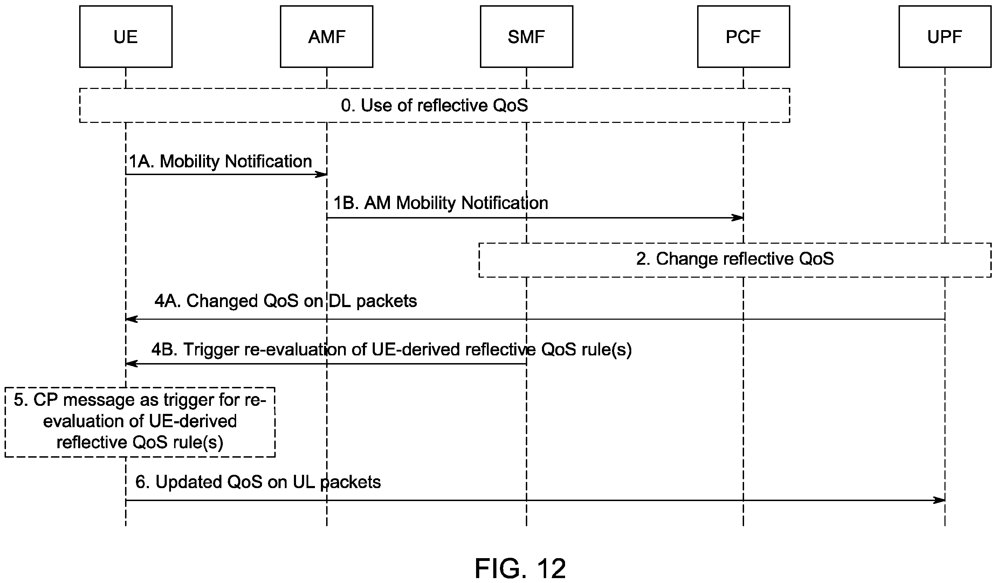

Alternatively, an explicit notification to re-evaluate UE-derived reflective QoS rule(s) can be considered. Fig. 12 shows a message sequence chart of a UE-based procedure with reflective QoS without UQSP. In this case, 4B is sent by the SMF, either by means of a PDU session modification message or via the AMF sending it via NAS, especially a UCU message, especially as part or associated of a Policy Section message. The message can be considered to contain or be associated to information associating the message to a specific PDU session and/or QoS flows. (If sent via a PDU session modification, the message is associated implicitly with the PDU session, whereas if sent via UCU, the UCU itself is not associated per se with a PDU session, so it needs to explicitly contain said information.)

This approach may have the advantage that the CN can deterministically send the message after the reflective QoS on the DL packets has been changed, with the drawback of requiring an explicit CP message. As in the previous case, in step 5 the UE triggers a re-evaluation of UE-derived reflective QoS rule(s), resulting in updated UL packets matching the QoS of the DL packets.

In some examples the method 10 may comprise indicating whether a UE supports multiple different procedures of adapting the QoS parameters and selecting, by a network node, one of the different procedures for adapting of the QoS parameters.

Some examples can be summarized as follows:
Examples may provide a UE communicating via one or more QoS flows and moving from one cell (Cell 1) and/or group of cells (e.g. Tracking Area) using a given QoS mapping to another cell (Cell 2) and/or group of cells using another QoS mapping, and the mobile network being notified of said mobility event.

In any of the cases, QoS/QoS mapping may refer especially to the QCI and/or 5QI values used in the one or more QoS flows.

Cell 1 and Cell 2 use different QoS mappings. Cell 1 and Cell 2 may be part of the same group of cells, especially the same Tracking Area. Cell 1 and Cell 2 might not be part of the same group of cells, especially not the same Tracking Area.

### Option A: CN-based

An SM policy change may be triggered based on an AM trigger. Additionally, AMF-based filtering may be performed based on mobility information, especially AMF-based, MME-based.

AMF, SMF and/or PCF registering support for heterogeneous QoS deployment when registering their NF profile in the NRF.

Subscriber information, especially in UDM and/or UDR, may contain whether a given UE requires support for heterogeneous QoS deployments. NF selection may be carried out, especially PCF selection by AMF and/or SMF based on whether a UE requires support for heterogeneous QoS deployments.

### Option B: UE-based

UQSP-based QoS change triggering may be used in examples. UQSP rules may be signaled to the UE via CP, especially via a NAS message, within or associated to a UE policy section, UE policy section identifier (UPSI), also especially as part of a UCU message or a PDU session establishment message. Some examples may use an association of a UQSP rule to a given network and/or network selection mode. Some examples may use an association of a UQSP rule to a given PDU session and/or QoS flow(s).

Some examples may use reflective-QoS-based QoS change triggering. They might or might not use UQSP. In examples a UE may report to the CN whether it supports QoS change triggering (e.g. a yes/no value or which type(s) it supports). For a UE supporting multiple types of UE-based QoS change triggering, the CN, especially the PCF and/or UDR, may be configured to prefer a given method, especially on a per-UE basis.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for adapting a Quality-of-Service, QoS, mapping in a cellular mobile communication system (400), the cellular mobile communication system (400) being configured to provide one or more services to user equipment (200), UE, based on one or more QoS flows, the method (10) comprising
detecting (11) a cell change event of a UE (200) changing between a first radio cell and a second radio cell in the mobile communication system (400), the UE being serviced by the first radio cell based on at least one QoS flow, wherein a QoS mapping used by or associated to the first radio cell is applied to the at least one QoS flow;
determining (12) whether the second radio cell uses a different QoS mapping than the first radio cell and in response to the QoS mapping of the second radio cell being different:
adapting (13) QoS parameters of the QoS flow of the UE (200) based on the QoS mapping of the second radio cell.

2. The method (10) of claim 1, wherein the first and second radio cells use the same radio access technology, wherein at least one of the first and second radio cells is a cell shared among multiple operators, especially three or more operators, and wherein the UE (200) is serviced by the same operator in the first and second radio cells.

3. The method (10) of one of the claims 1 or 2, wherein the adapting of the QoS parameters comprises triggering a QoS adaption procedure in a core network part of the mobile communication system (400).

4. The method (10) of one of the claims 1 to 3, wherein the adapting (13) of the QoS parameters comprises triggering one or more elements of the group of a session management policy change procedure, an access and mobility management function procedure, or a policy and charging rules function procedure of the mobile communication system.

5. The method (10) of one of the claims 1 to 4, further comprising filtering the cell change event based on a mobility filter policy to determine whether the QoS mapping of the second radio cell is different.

6. The method (10) of one of the claims 1 to 5, further comprising registering support of heterogeneous QoS deployment of network functions of the mobile communication system at a network repository function and/or registering whether a UE (200) needs support of heterogeneous QoS deployments.

7. The method (10) of one of the claims 1 to 6, wherein the adapting (13) of the QoS parameters comprises triggering a preconfigured network function.

8. The method (10) of one of the claims 1 to 7, wherein the adapting (13) of the QoS parameters comprises adapting the QoS parameter at the UE (200) based on a configured UE QoS selection policy.

9. The method (10) of claim 8, further comprising signaling the UE QoS selection policy to the UE (200) as part of a control plane message.

10. The method (10) of one of the claims 8 or 9, further comprising associating a UE QoS selection policy rule with a given network, a network selection mode, a packet data unit session, and/or a QoS flow.

11. The method (10) of one of the claims 1 to 10, wherein the adapting (13) of the QoS parameters comprises adapting the QoS parameter at the UE (200) based on a changed QoS parameter indication received in a downlink user and/or control plane transmission.

12. The method (10) of one of the claims 1 to 11, further comprising indicating to a network whether a UE (200) supports QoS change triggering.

13. The method (10) of claim 12, further comprising indicating whether a UE (200) supports multiple different procedures of adapting the QoS parameters and selecting, by a network node, one of the different procedures for adapting of the QoS parameters.

14. A computer program having a program code for performing one of the methods (10) of claims 1 to 13, when the computer program is executed on a computer, a processor, or a programmable hardware component.

15. An apparatus (20; 30) for adapting a Quality-of-Service, QoS, mapping in a cellular mobile communication system (400), the cellular mobile communication system (400) being configured to provide one or more services to user equipment (200), UE, based on one or more QoS flows, the apparatus (20; 30) comprises
one or more interfaces (22; 32) configured to communicate in the mobile communication system (400); and
one or more processing devices (24; 34) configured to perform one of the methods (10) of claims 1 to 13.
